# EUROPEAN PATENT APPLICATION

(11) **EP 4 450 332 A1**
(43) Date of publication of application: **23.10.2024**
(21) Application number: 23780680.7
(22) Date of filing: 29.03.2023
(51) Int. Cl.: B60R 11/02, E02F 9/24, E02F 9/26, H04N 7/18

(54) **OBJECT DETECTION SYSTEM**

(30) Priority: 30.03.2022 JP 2022055797
(71) Applicant: Hitachi Construction Machinery Co., Ltd., Tokyo 110-0015 (JP)
(72) Inventor: TAGO Hisashi, Tsuchiura-shi, Ibaraki 300-0013 (JP); HIGURASHI Masaki, Tsuchiura-shi, Ibaraki 300-0013 (JP); TANAKA Masamichi, Tsuchiura-shi, Ibaraki 300-0013 (JP); ARAI Masatsugu, Tsuchiura-shi, Ibaraki 300-0013 (JP); SAITO Risa, Tsuchiura-shi, Ibaraki 300-0013 (JP); SAKAI Daito, Tsuchiura-shi, Ibaraki 300-0013 (JP); SATO Kiichi, Tsuchiura-shi, Ibaraki 300-0013 (JP)
(74) Representative: Manitz Finsterwald Patent- und Rechtsanwaltspartnerschaft mbB
(86) International application number: PCT/JP2023/012771
(87) International publication number: WO 2023/190671

(57) **Abstract**

Provided is a data aggregation method by which near miss incidents can be concretely extracted by comprehensively displaying a detected situation in an entire site. The present invention includes a communication section 30 that receives detection data indicating detection of an object by an object detection sensor 19 attached to a vehicle body of a construction machine 100, and receives position information of the vehicle body; a recording section 34 that records at least the position information; and a detection result output section 32 that, on the basis of the detection data and the position information, outputs to an external monitor 40 a distribution density of positions and frequencies at which the object is detected by the object detection sensor 19.

## Description

### Technical Field

The present invention relates to an object detection system applied to an operation site of a construction machine.

### Background Art

The construction machine, as disclosed in Patent Literature 1, for example, is equipped with a sensor that detects an object or a person in the surroundings of the vehicle body, and has a function of providing a warning to an operator when the sensor detects a person or an object within a close range of the vehicle body, thereby restricting the movement of the vehicle body.

Furthermore, by accumulating information on the detection of the person or object, such as direction, location, time, and operation at the time of detection, it is possible to output a tendency of near miss incidents in the form of a report for a site manager.

### Citation List

### Patent Literature

Patent Literature 1: JP 6805883 B

### Summary of Invention

### Technical Problem

However, with the single information indicating detection of an object in the surroundings by the vehicle body, it is hard to imagine the near miss event occurring at the site, and it is difficult to specifically propose a method for improvement. It is an object of the present invention to provide an object detection system for construction machines capable of easily grasping where in the operation site of the construction machine and in what situation, the near miss incident occurred.

### Solution to Problem

To solve the above problems, the object detection system according to the present invention includes: a communication section that receives detection data indicating detection of an object by an object detection sensor attached to a vehicle body of a construction machine, and receives position information of the vehicle body; a recording section that records at least the position information; and a detection result output section that, on the basis of the detection data and the position information, outputs to an external monitor a distribution density of positions and frequencies at which the object is detected by the object detection sensor.

### Advantageous Effects of Invention

With the above configuration, as compared to the single information indicating detection of an object or the like in the surroundings by the vehicle body, it is possible to schematically and visually display detected positions of the object or the like and frequencies thereof on the external monitor. Therefore, it is possible to easily grasp where in the site and in what situation, the near miss incident occurred. This allows the site manager to easily propose an improvement in a security aspect.

Further features related to the present invention will become apparent from the description of this specification and the accompanying drawings. In addition, problems, configurations, and effects other than those described above will become apparent from the following description of embodiments.

### Brief Description of Drawings

Fig. 1 is a view illustrating a structure of a construction machine having a camera and an object detection sensor.
Fig. 2 is a block diagram of a functional configuration of the camera and the object detection sensor provided for the construction machine.
Fig. 3 is a functional block diagram of an object detection system installed on a server.
Fig. 4 is a flowchart of a process of storing moving image data captured by the camera of the construction machine in a recording device.
Fig. 5 is a flowchart of a process of transmitting data from the construction machine to the object detection system.
Fig. 6 is an exemplary report screen displayed on an external monitor.
Fig. 7 is an exemplary moving image list screen associated with object detected positions on a distribution density window.
Fig. 8 is an exemplary screen in which one of moving images in the moving image list of Fig. 7 is played.

### Description of Embodiments

Hereinafter, an embodiment of the present invention will be described referring to the drawings.

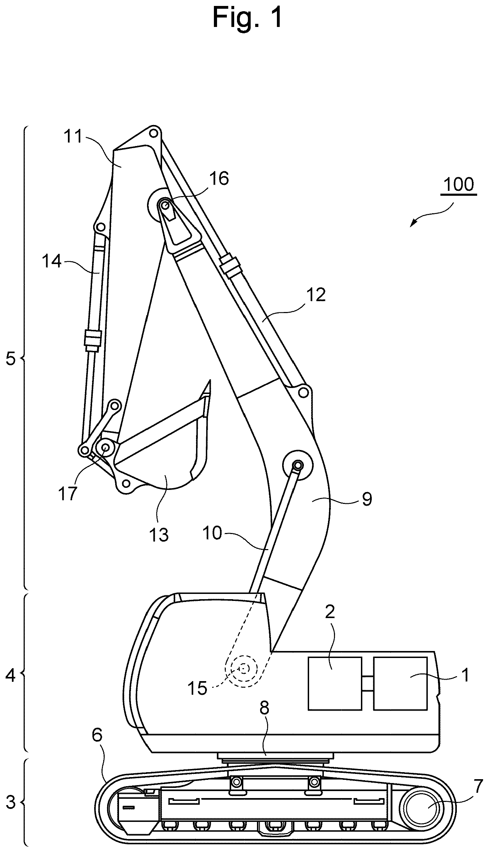

Fig. 1 illustrates a construction machine 100 having a camera and an object detection sensor, to which the present invention is applied.

The construction machine 100 includes an engine 1 as a prime mover and a main pump 2 driven by the engine 1. With the hydraulic fluid delivered by the main pump 2, a lower traveling body 3, an upper turning body 4, and a front device 5 operate independently of each other.

The lower traveling body 3 is configured to drive and control a pair of crawler tracks 6 (only one in the pair is illustrated in Fig. 1) using a hydraulic traveling motor 7.

The upper turning body 4 is provided to be able to turn relative to the lower traveling body 3, and rotation of a hydraulic turning motor 8 drives and controls the upper turning body 4.

The front device 5 is mounted on the upper turning body 4 and includes a boom 9, a boom cylinder 10 for driving the boom 9, an arm 11, an arm cylinder 12 for driving the arm 11, a bucket 13, and a bucket cylinder 14 for driving the bucket 13. The cylinders are extended and retracted with the hydraulic fluid delivered from the main pump 2, and various operations, such as digging and ground leveling, are performed by driving each of the upper turning body 4, a rotating shaft 15 of the boom 9, the boom 9, a rotating shaft 16 of the arm 11, the arm 11, and a rotating shaft 17 of the bucket 13.

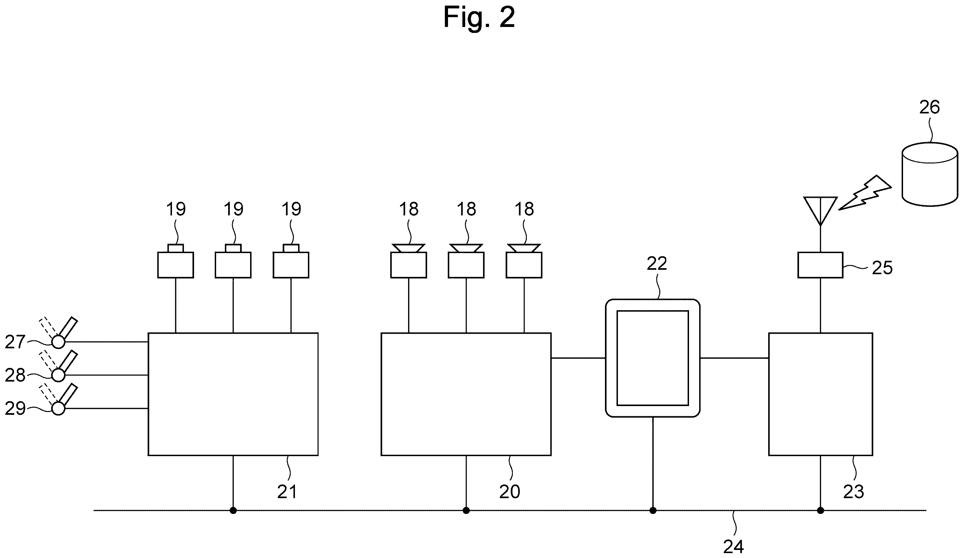

Fig. 2 is a block diagram of a functional configuration of the camera and the object detection sensor mounted on the construction machine 100.

Outside the driver seat of the construction machine 100, a plurality of cameras 18 and object detection sensors 19 for monitoring the surroundings are mounted. Inside the driver seat, a monitor control controller 20, a vehicle body control controller 21, a monitor 22, and a recording device 23 are mounted.

The controllers and the recording device 23 can communicate with each other via an in-vehicle network 24 such as CAN. The cameras 18 are connected to the monitor control controller 20 and the object detection sensors 19 are connected to the vehicle body control controller 21. The monitor control controller 20 synthesizes surrounding videos received from the cameras 18 and then outputs a synthesized video, to the monitor 22, as a surround view in which divided videos from the cameras 18 or boundaries between the adjacent cameras 18 are blended. The monitor 22 displays the input synthesized video, and further the monitor 22 outputs the displayed video to the recording device 23.

A communication terminal 25 is connected to the recording device 23. The recording device 23 stores the input video from the monitor 22 and the vehicle body information transmitted on the in-vehicle network 24, and connects to the Internet via the communication terminal 25, so as to enable both upload to a server 26 and access to the recording device 23 from the server 26. The communication terminal 25 acquires position information from a GPS (not illustrated).

The vehicle body control controller 21 transmits, to the recording device 23, a detection signal of the object detection sensor 19 for recording via the in-vehicle network 24. Upon receiving the detection signal, the recording device 23 stores the video and vehicle body data before and after the detection for a preset period of time. Furthermore, at the same time, the recording device 23 also stores a vehicle body position at the time of object detection acquired by the communication terminal 25, and ties it to the video and the vehicle body data. Note that as used herein, the vehicle body data includes operational information acquired from the sensors and the like provided for the construction machine, such as the rotational speed of the engine, inputs to various levers, position information, time, and the like.

Further, the vehicle body control controller 21 is a controller for hydraulic control of the machine, and is acquiring an operation amount of a turning lever 27 and an operation amount of a traveling lever 28 that are operated by the operator. The vehicle body control controller 21 is also acquiring a locked state and an unlocked state of a gate locking device 29 that enables or disables the operation of the vehicle body.

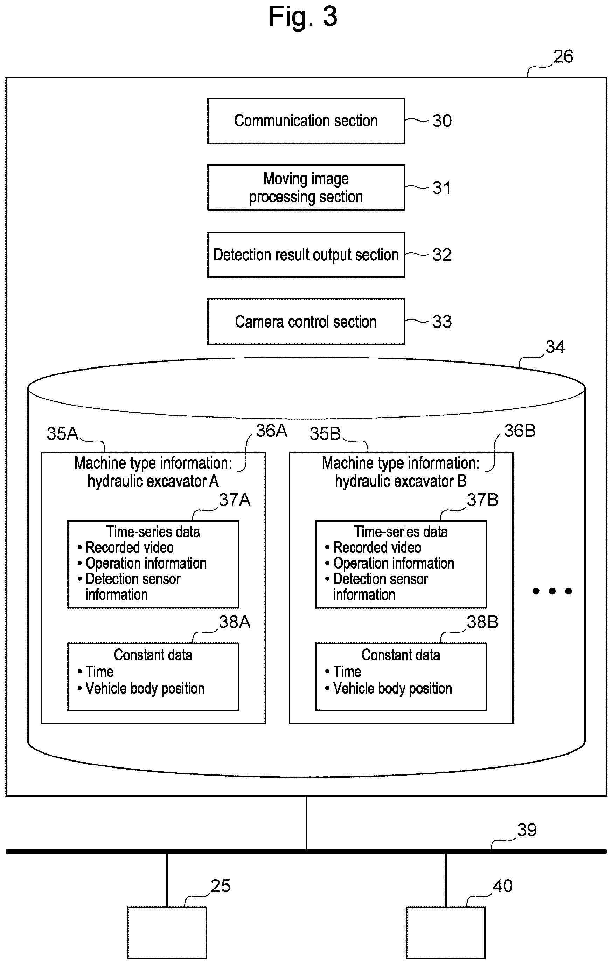

Fig. 3 is a block diagram illustrating a functional configuration of the object detection system installed on the server 26. Note that in the following description, the object detection system may be referred to simply as the "system."

The system includes a communication section 30, a moving image processing section 31, a detection result output section 32, a camera control section 33, and a recording section 34. The communication section 30 transmits and receives data to and from the communication terminal 25 on the construction machine 100 side via a network 39.

The moving image processing section 31 processes the moving image captured by the camera 18 of the construction machine 100, received at the communication section 30, stores the processed moving image as appropriate, and transmits it to the detection result output section 32.

In response to the communication section 30 receiving detection data, the detection result output section 32 records an object detected position corresponding to the detection data, and through accumulation thereof, calculates a distribution density indicating object detected positions and frequencies. In addition, the detection result output section 32 outputs distribution density information indicating the object detected positions and frequencies to an external monitor 40 connected via the network 39, and causes the external monitor 40 to display the distribution density information. The display of the distribution density indicating the object detected positions and frequencies will be described in detail later.

The camera control section 33 controls start of the camera 18 of the construction machine 100. Specifically, the camera control section 33 starts the camera 18 upon the unlocking of the gate locking device 29 of the construction machine 100 as a trigger.

The recording section 34 stores data 35 transmitted to the communication section 30 via the communication terminal 25 of the construction machine 100. The received data 35 is stored for each machine type (35A, 35B, ...). Each data 35 includes time-series data 37 and constant data 38. The time-series data 37 contains data related to a recorded video, operation information, detection sensor information, and the like within a predetermined amount of time before and after the point in time when an object or the like is detected by the object detection sensor 19 as the origin, for example. As used herein, "within a predetermined amount of time before and after" can be set to about 30 seconds, for example. However, even when the amount of time is not decided beforehand, any amount of time can be set, such as a time between when the object detection sensor 19 starts object detection and when the detection ends, for example. The constant data 38 contains data such as a time, vehicle body position, and the like at the point in time when an object or the like is detected by the object detection sensor 19.

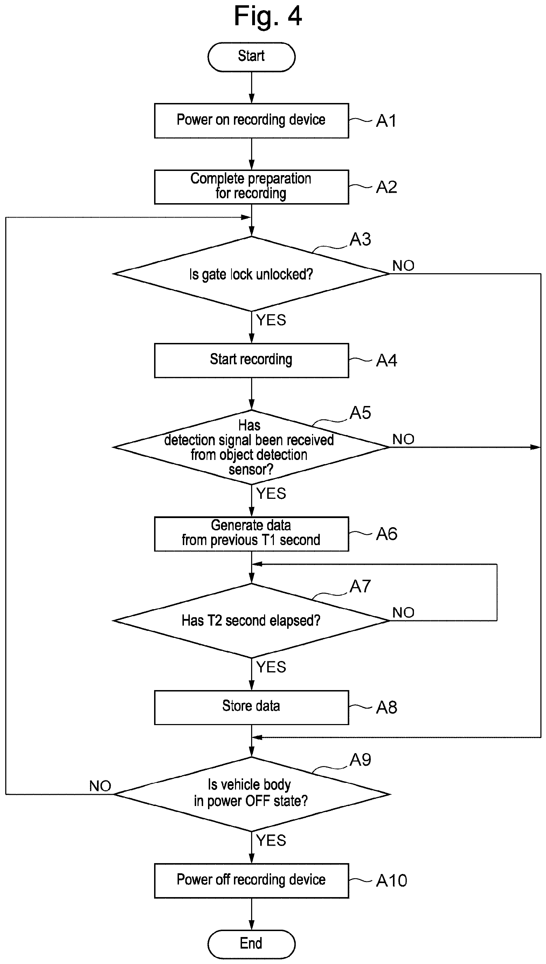

Fig. 4 is a flowchart when the server 26 stores video data and vehicle body data.

First, when the vehicle body is powered on, the recording device 23 is powered on, and the preparation for recording is completed (steps A1, A2).

The camera control section 33 determines whether the gate locking device 29 of the vehicle body is unlocked (step A3). If the gate locking device 29 is unlocked, the camera 18 is started to start image capturing and recording (step A4).

Next, the communication section 30 determines whether the vehicle body control controller 21 has received a detection signal of an object or the like from the object detection sensor 19 of the vehicle body (step A5).

If a detection signal has been received from the object detection sensor 19, the communication section 30 further receives, from the recording device 23, video data from a preset previous time T1 second, extracted from the video data generated by the monitor control controller 20 (step A6). The communication section 30 also stores vehicle body data at the point in time when the object or the like is detected by the object detection sensor 19.

Then, the communication section 30 waits until a predetermined amount of time T2 second has elapsed since the point in time when the object or the like is detected by the object detection sensor 19. After the T2 second has elapsed, the recording section 34 records the video data obtained so far (steps A7, A8).

After recording the video data in step A8, it is determined whether the vehicle body is in a power OFF state (step A9). If the vehicle body is not in the power OFF state, the process returns to step A3, and the step of determining whether a detection signal has been received and the steps of generating and storing data are repeated. Also if the gate locking device 29 is locked in step A3 and if no detection signal has been received in step A5, the determination in step A9 is performed.

If the vehicle body is determined to be in the power OFF state in step A9, the recording device 23 is powered off (step A10), and the control flow ends. At this time, although the vehicle body is in the power OFF state, the recording device 23 is being driven by a battery power source (not illustrated) of a separate system, and so the recording device 23 will not power itself off until the last data storage is completed.

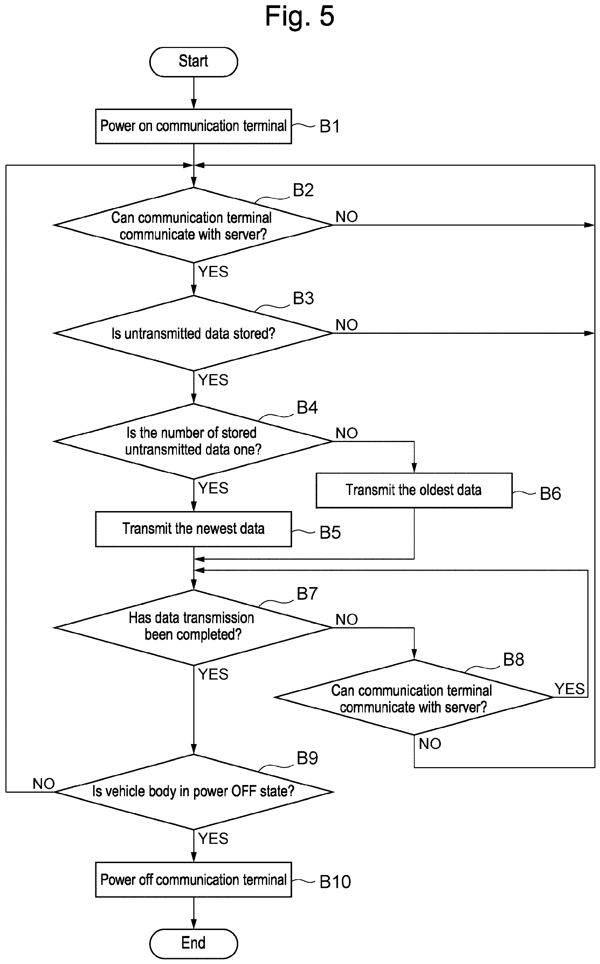

Fig. 5 is a flowchart when the communication terminal 25 transmits to the server 26 the video data and vehicle body data recorded in the recording device 23. This control is executed in parallel with the data generation flow of Fig. 4.

First, when the vehicle body is powered on, the communication terminal 25 is powered on (step B 1).

Next, the communication terminal 25 determines whether the communication terminal 25 itself is able to communicate with the server 26 (step B2). If the communication terminal 25 is unable to communicate with the server 26, the communication terminal 25 makes a retry, and will not perform subsequent control until it becomes able to communicate with the server 26.

If the communication terminal 25 and the server 26 are able to communicate with each other, the communication terminal 25 references the recording device 23, and determines whether untransmitted data is present in the recording device 23 (step B3). If there is no untransmitted data, the process returns to step B2.

If untransmitted data is stored in the recording device 23, the communication terminal 25 determines whether the number of untransmitted data is one or more (step B4). If the number of stored data is only one, this data is transmitted to the server 26 (step B5). If two or more untransmitted data is stored, the oldest data among the stored untransmitted data is transmitted to the server 26 (step B6). This is because, since the stored video data is displayed in time series in the moving image list as will be described later, unless the oldest data is transmitted first, the order in which the moving images are arranged in the moving image list may change, and the handling of the moving images may become complicated.

After the transmission processes in steps B5, B6, after either of the steps, the communication terminal 25 determines whether the transmission process performed in each step has surely been completed (step B7).

If the data transmission has not been completed, it is determined whether the communication terminal 25 is able to communicate with the server 26 (step B8). If the communication terminal 25 is able to communicate with the server 26, the process returns to step B7, and the communication terminal 25 waits until data transmission is completed. If the communication terminal 25 is unable to communicate with the server 26, the process returns to step B2, and the communication terminal 25 waits until it becomes able to communicate with the server 26.

If it is determined that data transmission has been completed in step B7, it is determined whether the vehicle body is in the power OFF state (step B9). If the vehicle body is not in the power OFF state, the process returns to step B2, and the steps of checking and transmitting untransmitted data are repeated.

If the vehicle body is determined to be in the power OFF state, the communication terminal 25 is powered off (step B10), and the control flow ends. At this time, although the vehicle body is in the power OFF state, the communication terminal 25 is being driven by a battery power source (not illustrated) of a separate system, and so the communication terminal 25 will not power itself off until the last data transmission is completed.

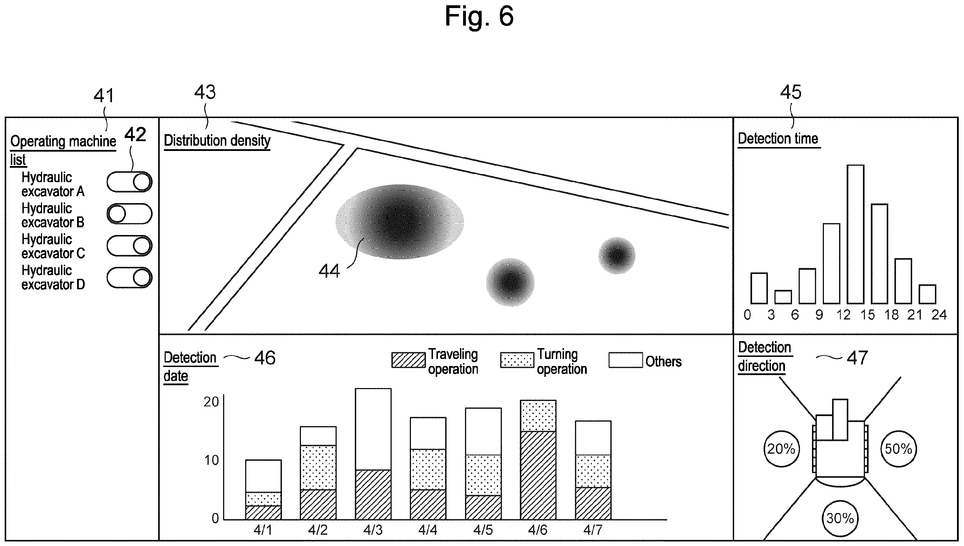

Fig. 6 is an exemplary report screen that the system displays on the external monitor.

The report screen illustrated in Fig. 6 is outputted from the detection result output section 32 of the system to the external monitor 40 based on the vehicle body data that the communication section 30 receives from the communication terminal 25 of the construction machine 100. This report screen is displayed on the screen of the external monitor 40. On the report screen, an operating machine list window 41, a distribution density window 43, a detection time window 45, a detection date window 46, and a detection direction window 47 are displayed.

In the operating machine list window 41, the list of machine type information 36 illustrated in Fig. 3 is displayed. A changeover switch 42 is assigned to each machine body. The vehicle body with its changeover switch 42 being active is selected as a target to be aggregated, and the received data 35 corresponding to this vehicle body is referenced from the recording section 34.

Based on the received data 35 within an aggregation period, the detection result output section 32 integrates the vehicle body positions at the time of detection of the object or the like by the object detection sensor 19 within the aggregation period, and renders a distribution density 44, in which color is darker in proportion to a detected location density, on the map in the distribution density window 43. At that time, information (link) linking to the moving image data captured within a predetermined range indicating the distribution density 44 is added to this distribution density 44. This allows the distribution density 44 to be linked to the moving image within the range, and a click on any position in the distribution density 44 (described later) allows a reference to the moving image within the range (area) indicating the distribution density 44. The detected location density herein indicates the positional frequency of detection of the object or the like within the aggregation period. In addition, the distribution density can be generated by a method in which, for example, a certain value is given to an area within a predetermined radius centered at the position of detection of the object or the like, and after aggregating the whole data, the range of tones of color is decided according to the sum of values given to the positions.

Note that the distribution density 44 may be displayed by a method that allows grasping the magnitude of distribution density by senses according to the range of tones of color, the size of figure, or a combination thereof.

In the detection time window 45, the times when the object or the like is detected within the aggregation period are referenced, and a proportion for each time slot is displayed. In the detection date window 46, the times when the object or the like is detected within the aggregation period are referenced, and the number of detections for each date and a breakdown of the operations being performed at the time of detection are displayed. In the detection direction window 47, directions of the object detection sensor 19 transmitting a detection signal to the recording device 23 within the aggregation period are referenced, and a proportion for each direction is displayed. Note that in the above configuration, the time when the recording device 23 receives a detection signal may be used as the reference.

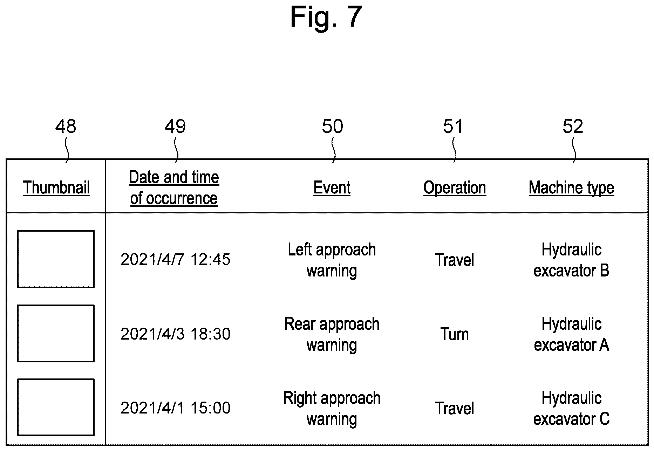

Fig. 7 is a configuration diagram of the moving image list screen linked from the distribution density 44.

A click on any point on the distribution density 44 of Fig. 6 allows moving to the list of the moving images recorded within a constant range around the clicked point. This list is generated by the moving image processing section 31 of the system. In the field of thumbnail 48, a still image of the video at the point in time when the object or the like is detected is displayed. In the field of date and time of occurrence 49, a date and time at that time is displayed. In the field of event 50, a type of object detection sensor 19 transmitting a detection signal and an event content at that time is displayed. In the field of operation 51, an operation being performed at that time is displayed. In the field of machine type 52, a machine type on which the recording device 23 is mounted is displayed. A click on any row in the moving image list allows moving to a moving image playback screen.

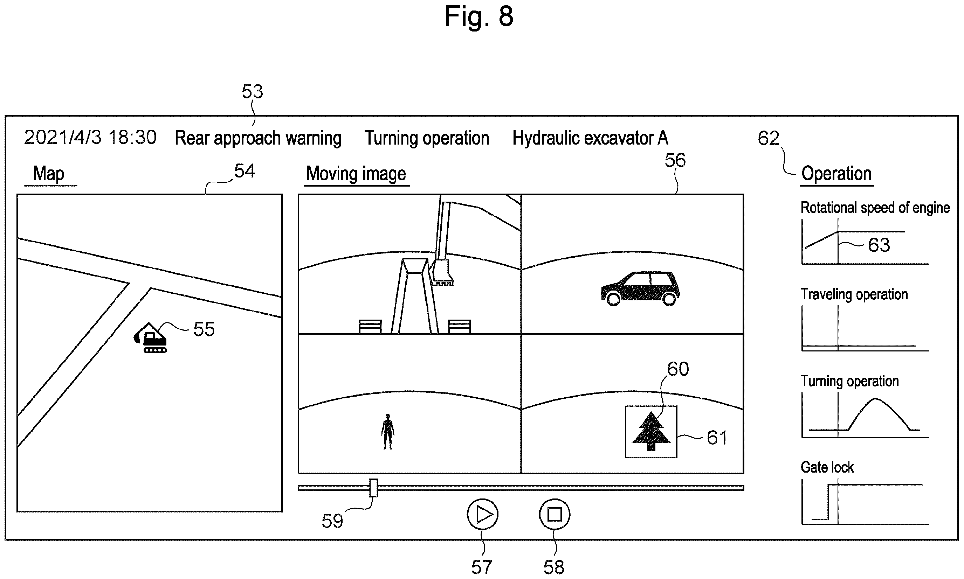

Fig. 8 is a configuration diagram of the moving image playback screen linked from the moving image list screen of Fig. 7.

In the upper part of the moving image playback screen, the information described in the moving image list is displayed as a moving image title 53. In a map window 54, a site map similar to the distribution density window 43 is displayed, and a machine icon 55 is displayed at the point referenced from the vehicle body position data. In a moving image window 56, a recorded video is displayed. A play button 57 and a stop button 58 are used to play/stop the moving image, and also a seek bar 59 is used to adjust the playback position. In an operation window 62, graphs for operation information about the rotational speed of the engine, traveling operation (traveling lever operation), turning operation (turning lever operation), and unlocking and locking of the gate locking device, for example, are displayed. The graphs are synchronized with the moving image data, and a playback position 63 on the graphs slides in accordance with the position of the seek bar 59.

Fig. 8 illustrates the moving image representing "Rear approach warning" in Fig. 7 during playback, where a tree 60 as a detection target is boxed in a detection target recognition frame 61.

According to the present embodiment, it is possible to extract and aggregate with high accuracy near miss events in the operation site of the construction machine equipped with the object detection system, and to provide a report that allows an accurate review of the situation of the site.

According to the above-described embodiment of the present invention, the following operational effects are produced.
(1) An object detection system according to the present invention includes a communication section that receives moving image data captured by a camera attached to a vehicle body of a construction machine, detection data indicating detection of an object by an object detection sensor attached to the vehicle body, and position information of the vehicle body; a recording section that records at least the moving image data and the position information; and a detection result output section that, on the basis of the detection data and the position information, outputs to an external monitor a distribution density of positions and frequencies at which the object is detected by the object detection sensor.
   With the above configuration, as compared to the single information indicating detection of an object or the like in the surroundings by the vehicle body, it is possible to schematically and visually display a distribution density of detected positions of the object or the like and frequencies thereof. Therefore, it is possible to easily grasp where in the site and in what situation, the near miss incident occurred. This allows the site manager to easily propose an improvement in a security aspect.
(2) The detection result output section displays, on the external monitor, a distribution of time slots when the object is detected by the object detection sensor, together with the distribution density of positions and frequencies, a date and time and an operation type of the vehicle body when the object is detected by the object detection sensor, and a breakdown of directions of the object detection sensor detecting the object. Accordingly, a wider variety of information is displayed on the external monitor. This allows the site manager to take safety measures from various perspectives.
(3) The detection result output section generates the distribution density of positions and frequencies for each of the plurality of vehicle bodies, and displays a list of the plurality of vehicle bodies on the external monitor, so as to allow selection of the vehicle body for which the distribution density of positions and frequencies is displayed on the external monitor. Accordingly, data can be collected from a plurality of operating machines, and the accuracy of the distribution density of positions and frequencies to be calculated is improved.
(4) The detection result output section calculates the distribution density of positions and frequencies with respect to a desired period of time. Accordingly, a flexible response can be made, for example, for a period of time in which many near miss events occurred, short-term information is acquired within a short aggregation period, whereas for a period of time in which not many near miss events occurred, long-term information is acquired within a long aggregation period.
(5) The object detection system further includes a moving image processing section that processes the moving image data, and the moving image processing section stores the moving image data received by the communication section within a predetermined amount of time before and after a point in time when the object is detected by the object detection sensor, in association with a point of detection of the object by the object detection sensor, on a display of the distribution density of positions and frequencies. Accordingly, a click on any point on the display of the distribution density of positions and frequencies allows viewing the moving image captured at that point, and thus the site environment can easily be recognized.
(6) The object detection system further includes a camera control section that starts the camera upon unlocking of a gate lock of the construction machine. Accordingly, the camera can surely be operated while the construction machine is operating.

It should be noted that the present invention is not limited to the aforementioned embodiment, and includes a variety of modifications. For example, although the aforementioned embodiment has been described in detail to clearly illustrate the present invention, the present invention need not include all of the configurations described. It is possible to replace a part of a configuration of an embodiment with a configuration of another embodiment. In addition, it is also possible to add, to a configuration of an embodiment, a configuration of another embodiment. Further, it is also possible to remove a part of a configuration of each embodiment, or for a part of a configuration of each embodiment, add or substitute a configuration of another embodiment.

### Industrial Applicability

The present invention is used in the operation site of the construction machine equipped with the object detection system.

### Reference Signs List

- 18: Camera
- 19: Object detection sensor
- 26: Server (object detection system)
- 29: Gate locking device
- 30: Communication section
- 31: Moving image processing section
- 32: Detection result output section
- 33: Camera control section
- 34: Recording section
- 40: External monitor

## Claims

1. An object detection system comprising:
a communication section that receives detection data indicating detection of an object by an object detection sensor attached to a vehicle body of a construction machine, and receives position information of the vehicle body;
a recording section that records at least the position information; and
a detection result output section that, on the basis of the detection data and the position information, outputs to an external monitor a distribution density of positions and frequencies at which the object is detected by the object detection sensor.

2. The object detection system according to claim 1,
wherein the communication section receives moving image data captured by a camera attached to the vehicle body of the construction machine,
wherein the recording section records the moving image data, and
wherein the detection result output section outputs to the external monitor the distribution density of positions and frequencies in association with the moving image data.

3. The object detection system according to claim 1, wherein the detection result output section displays, on the external monitor, a distribution of time slots when the object is detected by the object detection sensor, together with the distribution density of positions and frequencies.

4. The object detection system according to claim 1, wherein the detection result output section further displays, on the external monitor, a date and time and an operation type of the vehicle body when the object is detected by the object detection sensor.

5. The object detection system according to claim 1, wherein the detection result output section further displays, on the external monitor, a breakdown of directions of the object detection sensor detecting the object.

6. The object detection system according to claim 1, wherein the detection result output section generates the distribution density of positions and frequencies for each of the plurality of vehicle bodies, and displays a list of the plurality of vehicle bodies on the external monitor, so as to allow selection of the vehicle body for which the distribution density of positions and frequencies is displayed on the external monitor.

7. The object detection system according to claim 1, wherein the detection result output section generates the distribution density of positions and frequencies with respect to a desired period of time.

8. The object detection system according to claim 1,
wherein the communication section receives moving image data captured by a camera attached to the vehicle body of the construction machine,
wherein the recording section records the moving image data,
wherein the object detection system further comprises a moving image processing section that processes the moving image data, and
wherein the moving image processing section stores the moving image data received by the communication section within a predetermined amount of time before and after a point in time when the object is detected by the object detection sensor, in association with a point of detection of the object by the object detection sensor, on a display of the distribution density of positions and frequencies.

9. The object detection system according to claim 1,
wherein the communication section receives moving image data captured by a camera attached to the vehicle body of the construction machine,
wherein the recording section records the moving image data, and
wherein the object detection system further comprises a camera control section that starts the camera upon unlocking of a gate lock of the construction machine.
